(19)

Europäisches
Patentamt
European
Patent Office
Office européen
des brevets

(11) **EP 2 263 888 B1**

(12) **EUROPEAN PATENT SPECIFICATION**

(45) Date of publication and mention
of the grant of the patent:
**09.05.2012 Bulletin 2012/19**

(51) Int Cl.:
***B60C 11/11*** *(2006.01)*      *B60C 11/13* *(2006.01)*

(21) Application number: **10003531.0**

(22) Date of filing: **31.03.2010**

(54) **Pneumatic tire for running on rough terrain**

Luftreifen zum Fahren im Gelände

Pneu pour rouler sur terrain accidenté

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.06.2009 JP 2009144474**

(43) Date of publication of application:
**22.12.2010 Bulletin 2010/51**

(73) Proprietor: **Sumitomo Rubber Industries, Ltd.
Hyogo-ken (JP)**

(72) Inventor: **Idei, Mitsushige
Kobe-shi
Hyogo 651-0072 (JP)**

(74) Representative: **Manitz, Finsterwald & Partner
GbR
Postfach 31 02 20
80102 München (DE)**

(56) References cited:
**EP-A2- 0 354 718        JP-A- 2003 025 810
JP-A- 2005 199 927        JP-A- 2010 105 416**

EP 2 263 888 B1

## Description

### Background of the invention

The present invention relates to a pneumatic tire for rough terrain, more particularly to a geometry of a tread block capable of improving running performance on rough terrain.

Pneumatic tires for used with vehicles for running on rough terrain such as motocross bikes and rally cars are usually provided with block type tread patterns made up of a plurality of tread blocks, for example, as disclosed in Japanese Patent Application Publication No.JP-A-2005-289092.

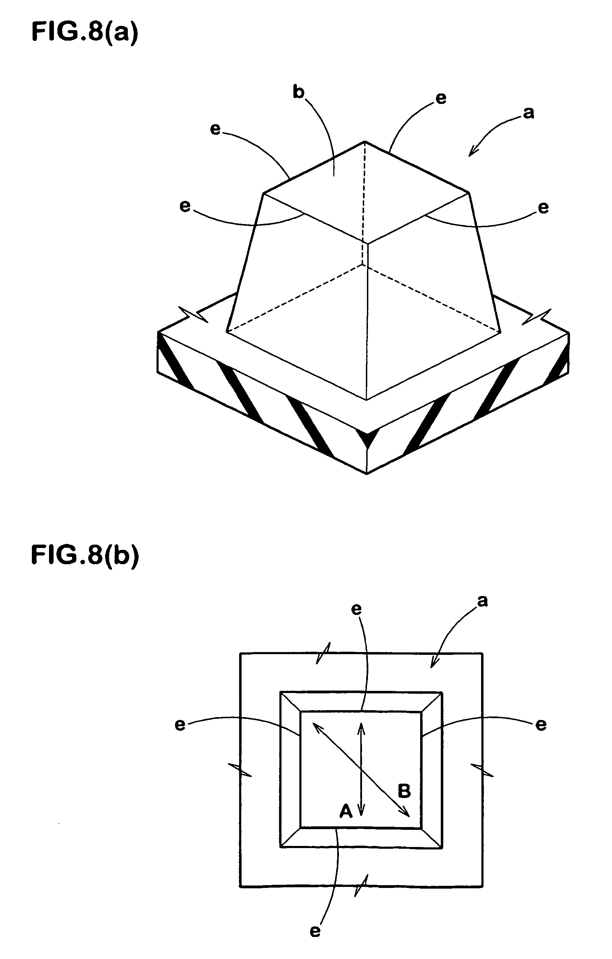

In order to derive a large grip force on rough terrain, as shown in Fig.8(a), the top surface (b) of the tread block (a) is formed as a rectangular shape because the edges (e) of the top surface (b) increase the friction with the road surface, thus, big drive power can be obtained.

Conventionally, the contour shape of a section of the tread block (a) taken parallel with the top surface (b) is substantially not changed from the top to the bottom of the tread block even if the size thereof is gradually increased as shown in Fig.8(a).

When such a tread block receives a force from a road surface, the tread block is deformed (leans) more or less, and the amount of deformation is varied depending on the direction of the force even if the magnitude of the force is the same. Namely, in terms of the bending deformation, the tread block has anisotropic nature (herein after the "deformation anisotropic nature").

For example, as shown in Fig.8(b) which is a plan view of the tread block (a) shown in Fig.8(a), the tread block (a) is hard to deform when the applied force B is in a direction of a diagonal line. But, when the applied force A is in a perpendicular direction, the tread block (a) is deformed easier.

The tread blocks of a pneumatic tire for running rough terrain are subjected to large forces in various directions when compared with general pneumatic tires. Therefore, if the block has a strong deformation anisotropic nature, there is a possibility that, when a large force in a specific direction is applied to the tread block, the tread block is deformed largely and the top surface (b) can not contact with the road surface. In this case, accordingly, the ground contact area is significantly decreased, and necessary grip performance can not be obtained.

JP 2005-199927 A discloses a bicycle tire in which a plurality of knobs are arranged on the tread surface, each knob comprising a base part of trapezoidal sections protruded from the tread surface and a columnar block part continuous to a top face of the base part.

### Summary of the Invention

It is, therefore, a primary object of the present invention to provide a pneumatic tire for running on rough terrain, in which the deformation anisotropic nature of the tread blocks is lessened not to decrease the ground contact area of the tread blocks and thereby the grip performance is improved.

This object is achieved with a pneumatic tire having the features of claim 1.

With the inventive pneumatic tire, even if an angular polygonal shape is employed as the contour shape of the top surface, the deformation anisotropic nature of the tread block is lessened. As a result, it becomes possible for the top surface to contact with road surface tightly, and the road grip performance on rough terrain can be improved.

### Brief Description of the Drawings

Fig.1 is a cross sectional view of a motorcycle tire for rough terrain according to the present invention.
Fig.2 is a developed partial view of the tread portion showing an example of the tread block arrangement therefor.
Fig.3 is a perspective view of an example of a tread block according to the present invention.
Fig.4 is a perspective view of another example of the tread block.
Fig.5 is a perspective view of still another example of the tread block.
Fig.6 is a perspective view of still more another example of the tread block according to the present invention.
Figs.7(a)-7(f) are schematic plan views of tread blocks used in the undermentioned comparison tests.
Fig.8(a) and Fig.8(b) are a perspective view and a plan view, respectively, of a conventional tread block.

### Description of the Preferred Embodiments

Embodiments of the present invention will now be described in detail in conjunction with accompanying drawings.

According to the present invention, pneumatic tire 1 for running on rough terrain comprises a tread portion 2, a pair of sidewall portions 3, a pair of bead portions 4 each with a bead core 5 therein, a carcass 6 extending between the bead portions 4 through the tread portion 2 and sidewall portions 3, and a tread reinforcing cord layer.

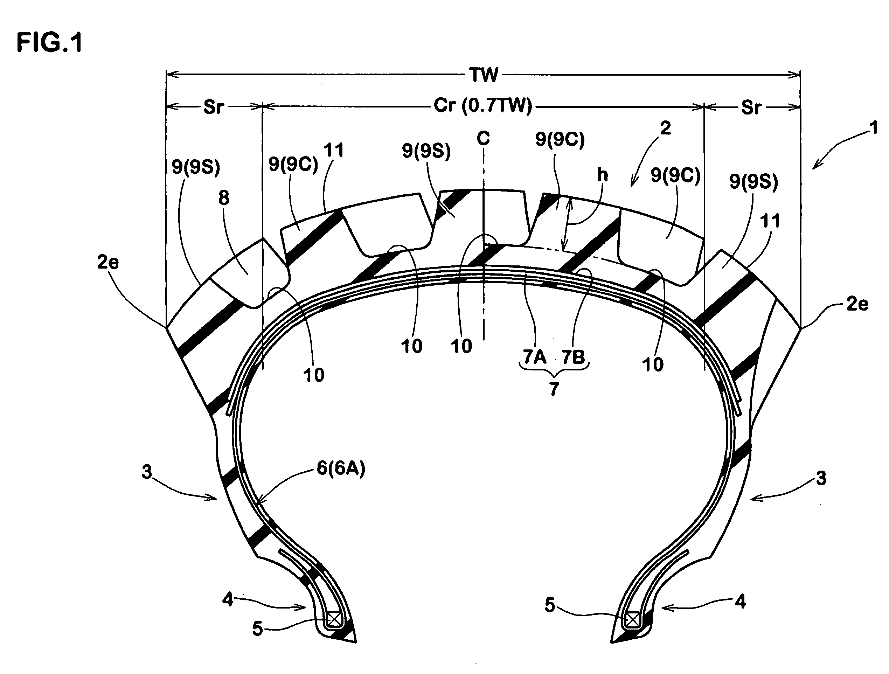

Fig.1 shows an embodiment of the present invention, wherein the pneumatic tire 1 is a motorcycle tire of which tread portion 2 is curved concavely with a relatively small radius of curvature when compared with those of passenger car tires, and as a result, the tread width Tw becomes the maximum cross section width of the tire.

The tread width TW is the axial distance between the tread edges 2e measured under a normally inflated unloaded condition of the tire.

If the tread edges are indefinite due to a round profile of tire shoulders which is often found in the case of passenger car tires, the tread edges 2e are defined by the axial outermost edges of the ground contacting patch (camber angle=0) under a normally inflated loaded condition.

Here, the normally inflated unloaded condition is such that the tire is mounted on a standard wheel rim and inflate to a standard pressure but loaded with no tire load.

The normally inflated loaded condition is such that the tire is mounted on the standard wheel rim and inflate to the standard pressure and loaded with the standard tire load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at Various Cold Inflation Pressures" table in TRA or the like. The standard load is the "maximum load capacity" in JATMA, the "Load Capacity" in ETRTO, the maximum value given in the above-mentioned table in TRA or the like. In case of passenger car tires, however, 88 % of the maximum tire load is used as the standard tire load.

In this application, various dimensions, positions and the like of the tire refer to those under the normally inflated unloaded condition of the tire unless otherwise noted.

The carcass 6 is composed of at least one ply 6A of carcass cords extending between the bead portions 5 through the tread portion 2 and sidewall portions 3 and turned up around the bead core 5 in each of the bead portions 4 to be secured thereto. In this embodiment, organic fiber cords are suitably used for the carcass cords.

As to the tread reinforcing layer, according to the carcass structure, namely, whether a radial ply structure or bias ply structure, a breaker or a band or both of them are disposed radially outside the carcass 6 in the tread portion 2. In this embodiment, a breaker 7 comprising two cross breaker plies 7A and 7B is disposed.

The tread portion 2 is provided with a plurality of tread blocks 9 protruding radially outwardly from a tread bottom 10. In this embodiment, the use of term "tread bottom" is preferable to the use of term "groove bottom" because the area is very broad, therefore the term "tread bottom" 10 is used in this embodiment. But, this term corresponds to the entirety of tread grooves' bottom in the case of passenger car tires, heavy duty tires and the like.

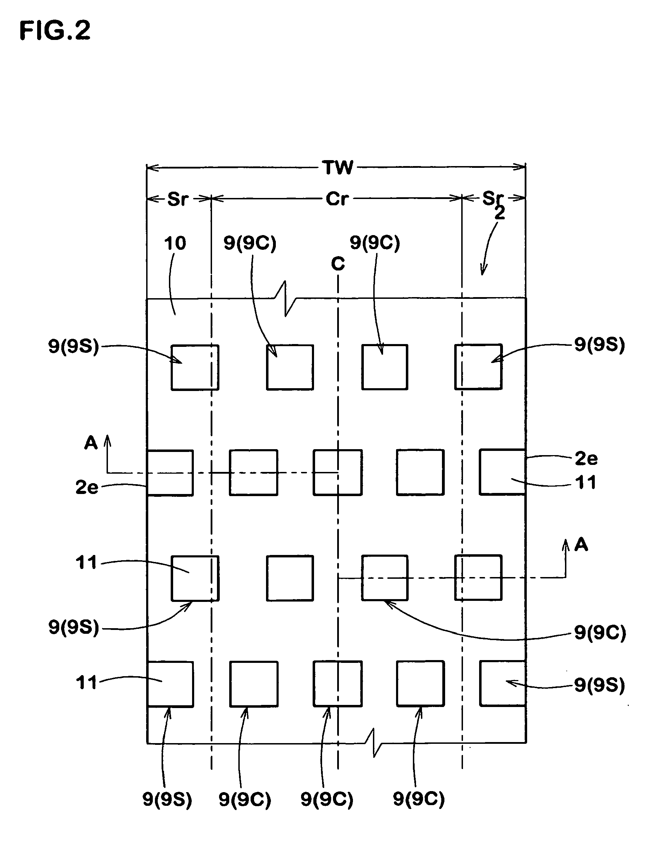

As show in Fig.2 which shows an example of the arrangement of the tread blocks 9, the block arrangement is sparse. The land ratio (xb/x) of the ground contacting area xb to the gross area x of the tread portion 2 is set in a range of not less than 10 %, preferably not less than 17 %, more preferably not less than 18 %, but not more than 30 %, preferably not more than 28 %, more preferably not more than 26 %. The ground contacting area xb is the total area of the top surfaces 11 of the tread blocks 9.

Therefore, the ground pressure of each of the tread blocks 9 is increased. Accordingly, the amount of penetration of the tread block 9 into soft ground (muddy terrain) increases, which is useful for obtaining a large drive power. Further, as the distances between the tread blocks 9 are relatively large, mud and soil therebetween are easily discharged.

The tread blocks 9 include crown tread blocks 9C and shoulder tread blocks 9S.

The crown tread block 9C is defined as having the top surface 11 of which centroid is positioned in a crown region Cr.

The crown region Cr is defined as being centered on the tire equator C and having a width of 70 % of the tread width TW.

The shoulder tread block 9S is defined as having the top surface 11 of which centroid is positioned in one of shoulder regions Sr one on each side of the crown region cr.

Thereby, the crown tread blocks 9C contact with the road surface during straight running, and the shoulder tread blocks 9S contact with the road surface during cornering.

In Fig.2, the crown tread blocks 9C and shoulder tread blocks 9S are arranged in a plurality of axial rows. Each of the axial rows is made up of at least two crown tread blocks 9C and at least two shoulder tread blocks 9S which align along the tire axial direction. Such arrangement can produce large traction force and breaking force on soft ground, and thus preferably be used in this embodiment. However, in the present invention, the arrangement of the tread blocks 9 is not to be limited to this example. Various arrangements are possible. The cross sectional view taken along line A-A in Fig.2 is shown in Fig.1.

The top surface 11 of each of the tread blocks 9 preferably has a contour shape St which is a substantially polygonal shape defined by straight edges 11e.

The term "substantially" means that the corners of such polygonal shape can be chamfered by an arc segment of a radius of less than 3 mm or a straight segment of less than 6 mm length in order to prevent the rubber of the tread block from chipping off. The chamfered parts of such small sizes are disregard when deciding the shape.

As to the polygonal shape, a rectangular shape, pentagonal shape, hexagonal shape, heptagonal shape or the like can be used. In either case, it is preferable that the edges 11e of the top surface 11 include: at least one axial edge inclined at an angle in a range of from 0 to 20 degrees with respect to the tire axial direction; and at least one circumferential edge inclined at an angle of from 0 to 20 degrees with respect to the tire circumferential direction. Therefore, due to the road scratching effect of such edges, the grip performance during straight running and cornering can be improved.

In this embodiment, as shown in Fig.2, the top surfaces 11 of all the tread blocks 9 have substantially rectangular contour shapes St each defined by four straight edges 11e which are two axial edges at 0 degrees with respect to the tire axial direction, and two circumferential edges at 0 degrees with respect to the tire circumferential direction.

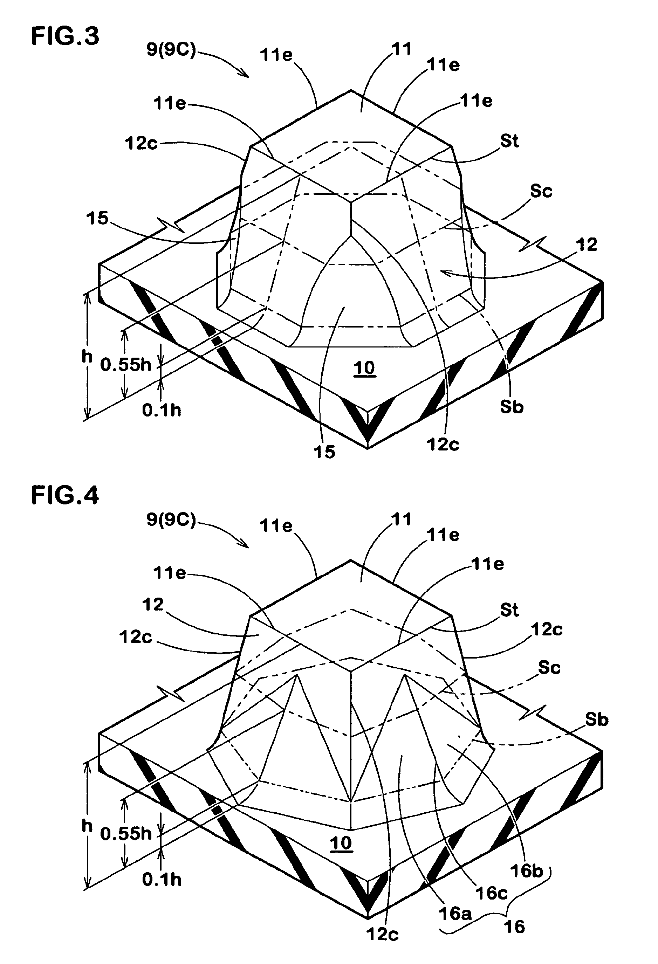

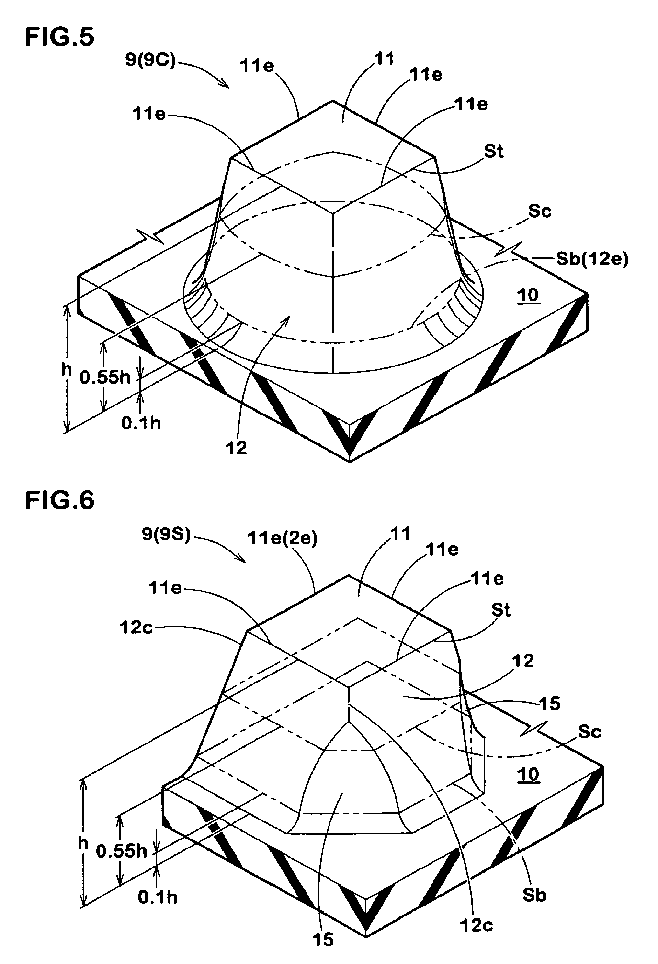

Figs.3, 4 and 5 each show an example of the geometry of the tread block 9 (specifically, crown tread block 9C) according to the present invention. Fig.6 shows still another example of the geometry of the tread block 9 (specifically, shoulder tread block 9S) according to the present invention.

The tread block 9 has a side surface 12 which is defined as extending radially inwardly from the edges 11e of the top surface 11 to the tread bottom 10.

Excepting chamfered parts if any, the side surface 12 can be: a combination of flat surfaces; or a combination of flat surfaces and curved surfaces; or a combination of curved surfaces; or a single curved surface. Here, the single curved surface means a curved surface having no edge line.

In each of the examples shown in Figs.3-6, the contour shape St of the top surface 11 is a substantially rectangular shape.

According to the present invention, the degree of circularity Eb of the contour shape Sb of a section of the tread block 9 taken parallel with the top surface 11 at its block foot position is set to be more than the degree of circularity Et of the contour shape St of the top surface 11.

The block foot position means a position spaced radially outwardly apart from the tread bottom 10 by 10 % of the height (h) of the tread block 9 from the tread bottom 10.

The degree of circularity is defined by the following formula (1):

$$4 \text{ pi } \times S/L2 \quad \text{---} \quad (1)$$

wherein,

pi is the circumference ratio (3.14--),

S is the area of the contour shape concerned, and

L is the circumferential length of the contour shape concerned.

In the case of a perfect circle, the degree of circularity is 1.0. when the shape is more variant from a perfect circle, the value of the degree of circularity becomes smaller.

If the value of the degree of circularity Et of the contour shape St of the top surface 11 is more than 0.87, the road scratching effect of the edges 11e of the top surface 11 is deceased. If less than 0.56, the durability and wear resistance of the tread block tends to decrease.

Therefore, the degree of circularity Et of the contour shape St of the top surface 11 is preferably set in a range of not less than 0.56, more preferably not less than 0.60, but not more than 0.87, more preferably not more than 0.80.

since the value of the degree of circularity Eb of the contour shape sb of the section at the foot position is larger than the value of the degree of circularity Et of the contour shape St of the top surface 11, the contour shape Sb at the block foot position becomes closer to a perfect circle when compared with the contour shape St of the top surface 11. As a result, the deformation anisotropic nature of the tread block 9 is lessened, and the top surface 11 of the tread block 9 can contact with the ground certainly even when the tread block is subjected to large forces in various directions.

If the value of the degree of circularity Eb of the contour shape sb of the section at the block foot position is less than 0.86, it becomes difficult to effectively lessen the deformation anisotropic nature of the tread block 9.

Therefore, it is desirable that the degree of circularity Eb is not less than 0.86, more preferably not less than 0.87, still more preferably not less than 0.90.

In order to surely lessen the deformation anisotropic nature of the tread block 9, the ratio (Eb/Et) of the degree of circularity Eb at the block foot position to the degree of circularity Et of the top surface 11 is preferably set to be not less than 1.10, more preferably not less than 1.25.

If the ratio (Eb/Et) becomes more than 1.60, on the other hand, there is a possibility that the uneven wear resistance is decreased since the change in the contour shape of the tread block 9 becomes large.

Therefore, the ratio (Eb/Et) is set to be not more than 1.60, more preferably not more than 1.50.

In the example shown in Fig.3, the contour shape sb of the section at the block foot position is substantially an octagon. If explained based on the conventional block shown in Fig.8(a), such octagonal shape can be obtained by cutting off the four corners (12c) from a certain depth to the tread bottom 10, wherein the cut surface 15 extends radially inwardly from the above-mentioned certain depth while increasing its width toward the bottom. The cut surface 15 can be a flat surface or a curved surface. In this example, the cut surface 15 is an inclined flat surface. The remained part of the side surface 12 other than the four cut surfaces 15 is four flat surfaces inclined at the substantially same angle as the cut surface 15. As a result, the side surface 12 has four edge lines 12c. Each of the four edge lines 12c extends radially inwardly from one of the corners between the edges 11e, namely, from the top of the tread block, to the above-mentioned certain depth, and then bifurcates into two edge lines which extend to the tread bottom 10 while increasing the distance therebetween. Thus, the contour shape of the section alters into a regular octagon from a rectangle as the depth increases.

In the example shown in Fig.4, the contour shape Sb of the section at the block foot position is substantially an octagon. In this example, the contour shape alters into a regular octagon from a rectangle through a 16-sided polygon. If explained based on the conventional block shown in Fig.8(a), each of the four inclined flat parts of the side surface 12 between the corners (12c) is provided with a bulge 16, wherein the bulge 16 extends from a certain depth towards the tread bottom 10, while increasing its width. The bulge 16 has two substantially-triangular oblique surfaces 16a and 16b which intersect at an angle. This intersecting angle is about 135 degrees in any section parallel with the top surface 11 because the target contour shape is a regular octagon of which an internal angle is 135 degrees. The line of intersection therebetween extends straight forming an edge line (or ridge) 16c. The shapes of the two oblique surfaces 16a and 16b are symmetry about the line of intersection (16c). The edge line 16c lies midway between the corners (12c) and extends from the above-mentioned certain depth to the tread bottom 10.

In the example shown in Fig.5, the contour shape Sb of the section at the block foot position is substantially a perfect circle (namely, Eb=1.0). In this example, the side surface 12 is mainly formed from curved surfaces. From the top to a certain depth, the four edges of the section parallel with the top surface are straight and accordingly the contour shape is rectangular. But, from the certain depth to the block foot position, as the depth is increased, each of the four edges alters into a circular arc (12e) having a radius of curvature gradually decreasing. For example, when the top surface is a square, each of the four edges alters into a circular arc (12e) of 90 degrees. From the block foot position to the tread bottom 10, the circular arc (12e) is gradually increased in the radius of curvature while keeping its arc angle (for example 90 degrees). Thus, the base of the tread block is flared, in other words, the diameter of the base is gradually increased.

In the example shown in Fig.6, the contour shape Sb of the section at the block foot position is an irregular hexagonal shape. In this example, the side surface 12 is mainly formed from flat surfaces. If explained based on the conventional block shown in Fig.8(a), from a certain depth to the tread bottom 10, the two corners (12c) on the tire equator side are cut off in the same manner as the example shown in Fig.3. But, the two corners (12c) on the tread edge side are not cut off, thus extend to the tread bottom. As a result, the tread block can resist against a force pushing the tread block towards the axially outside. Therefore, this geometry is preferably employed in the shoulder tread blocks 9S.

As explained above, the geometry of the tread block 9 can be variously modified. In either case, however, it is desirable that the tread block 9 satisfies the following conditional equation (2):

$$Et < Ec < Eb \quad --- (2)$$

wherein

Ec is the degree of circularity of the contour shape Sc of a section taken parallel with the top surface 11 at a block intermediate position.

The block intermediate position is a position spaced radially outwardly apart from the tread bottom 10 by 55 % of the height (h) of the tread block from the tread bottom 10.

As a result, the change in the contour shape of the section becomes smooth, and since a concentration of deformation on a specific position is avoided, the durability of the tread block 9 can be improved.

From this standpoint, it is especially preferable that the degree of circularity is gradually (substantially continuously) increased from a position between the top surface 11 and about 10 to 15% of the height (h) to the block foot position.

Preferably, the value of the degree of circularity Ec of the contour shape Sc of the section at the block intermediate position is set in a range of not less than 0.75, more preferably not less than 0.86, but not more than 0.93, more preferably not more than 0.90.

In view of a smooth change in the contour shape, it is desirable that the above-mentioned degrees of circularity Et, Ec and Eb satisfy the following conditional equations (3) and (4):

$$1.05 =< Et/Ec =< 1.50 \quad --- (3)$$

$$1.05 =< Ec/Eb =< 1.50 \quad --- (4)$$

On the other hand, it is also desirable that the circumferential length Lt of the contour shape St of the top surface 11, the circumferential length Lb of the contour shape Sb at the block foot position and the circumferential length Lc of the contour shape Sc at the block intermediate position satisfy the following conditional equation (5), more preferably satisfy the following conditional equation (5)':

$$Lt =< Lc =< Lb \quad --- (5)$$

$$Lt < Lc < Lb \quad --- (5)'$$

By gradually increasing the circumferential length (Lt, Lc, Lb) from the top surface 11 side towards the tread bottom 10 side, the bending rigidity of the tread block can be gradually increased towards the tread bottom 10 side, while lessening the deformation anisotropic nature of the tread block 9. specifically, for that purpose, it is preferable that the following conditional equations (6) and (7) are further satisfied:

$$1.10 =< Lb/Lt =< 1.40 \quad --- (6)$$

$$1.02 =< Lb/Lc =< 1.20 \quad --- (7)$$

As a result, the ground contact of the top surface and the durability of the tread block 9 can be further improved.
If the ratio(Lb/Lt) is less than 1.10 or the ratio (Lb/Lc) is less than 1.02, then the bending rigidity of the tread block 9 tends to become insufficient, therefore, there is a possibility that the effect to improve the uneven wear and ground contact decreases. If the ratio(Lb/Lt) is more than 1.40 or the ratio (Lb/Lc) is more than 1.20, then the bending rigidity of the tread block 9 is excessively increased, and as a result, it becomes difficult for the tread block to follow to the road surface and there is a possibility that the ground contact becomes worse.
As the crown tread block 9C contacts with the road surface during straight running rather than during cornering, the crown tread block 9C is subjected to large forces in various directions when compared with the shoulder tread block 9S. on the other hand, as the shoulder tread block 9S contacts with the road surface during cornering, the shoulder tread block 9S is subjected to large forces mainly in the tire axial direction. Therefore, it is possible that the crown tread block 9C and shoulder tread block 9S satisfy the following conditional equation (8):

$$Ebs > Ebc \quad --- (8)$$

wherein
Ebc is the degree of circularity of the crown tread block 9C at the block foot position, and
Ebs is the degree of circularity of the shoulder block at the block foot position.
In this case, the degree of circularity ratio (Et/Eb) of such shoulder tread block 9S is set to be smaller than that of the crown tread block 9C.
As explained in the example shown in Fig.6, it is possible to utilize the residual deformation anisotropic nature of the shoulder tread block 9S in order to increase the bending rigidity against a force pushing the tread block towards the axially outside.

# EP 2 263 888 B1

Comparison tests

Motorcycle tires of size 110/90-19 having the tire structure shown in Fig.1 and the block arrangement shown in Fig.2 and specifications given in Table 1 were made and tested for running performance on rough terrain.

In the test, 250cc motocross bikes provided on the rear wheels with test tires (inflated to 80 kPa) were run in a motocross tire test course including a soft ground and a hard ground like a bedrock, and running performance of each test tire was evaluated into ten ranks by ten riders, based on their feelings about the road grip and ground contact of the tread blocks.

With respect to each test tire, the mean value of the rank numbers by the ten riders is shown in table 1, wherein the larger value is better.

Table 1

| Tire | Conv. | Ex.1 | Ex.2 | Ex.3 | Ex.4 | Ex.5 |
|---|---|---|---|---|---|---|
| Tread block | | | | | | |
| Plan view (Fig.) *1 | 7(a) | 7(b) | 7(c) | 7(d) | 7(e) | 7(f) |
| Top surface | | | | | | |
|     contour shape St | square | square | square | square | square | square |
|     circularity Et | 0.79 | 0.79 | 0.79 | 0.79 | 0.79 | 0.79 |
|     circum. length Lt (mm) | 80 | 80 | 80 | 80 | 80 | 80 |
| Intermediate position | | | | | | |
|     circularity Ec | 0.79 | 0.88 | 0.90 | 0.84 | 0.84 | 0.75 |
|     circum. length Lc (mm) | 90 | 85 | 84 | 87 | 87 | 92 |
| Block foot position | | | | | | |
|     contour shape Sb | square | octagon | circle | hexagon | hexagon | rectangle |
|     circularity Eb | 0.79 | 0.95 | 1.00 | 0.87 | 0.87 | 0.71 |
|     circum. length Lb (mm) | 100 | 91 | 89 | 95 | 95 | 100 |
| Ratio (Eb/Et) | 1.00 | 1.21 | 1.27 | 1.11 | 1.11 | 0.91 |
| Ratio (Lb/Lt) | 1.25 | 1.14 | 1.11 | 1.19 | 1.19 | 1.31 |
| Ratio (Lb/Lc) | 1.11 | 1.07 | 1.06 | 1.09 | 1.09 | 1.14 |
| Test results | | | | | | |
|     Road grip | 7.0 | 7.5 | 7.5 | 7.0 | 7.25 | 7.0 |
|     Ground contact | 7.0 | 7.25 | 7.5 | 7.25 | 7.25 | 6.5 |

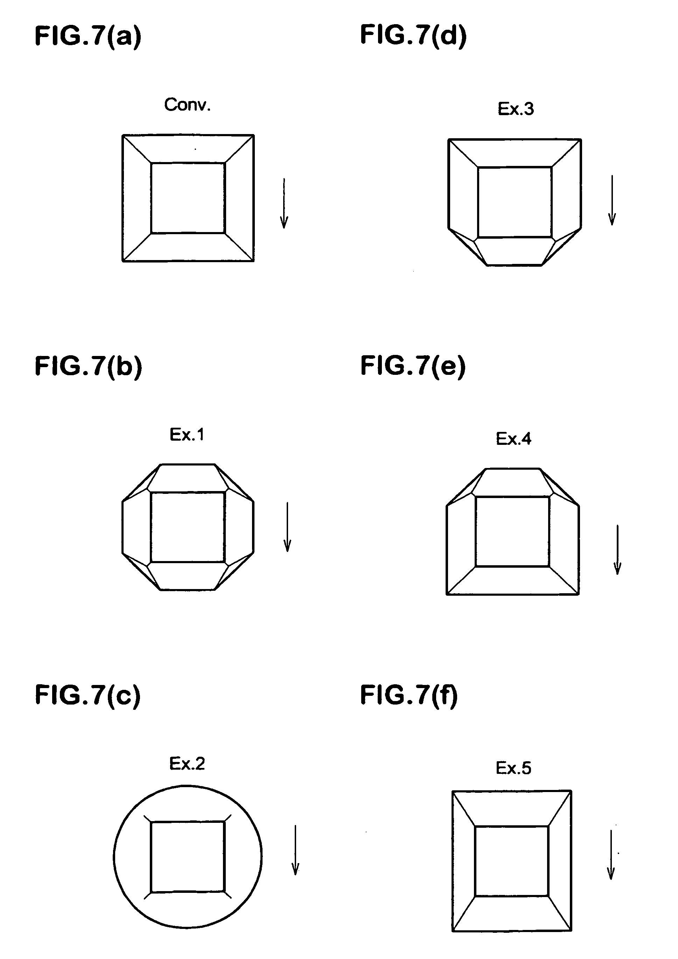

*1) In Figs.7(a)-(f), arrows indicate tire rotational direction during traveling forward.

Through the test, it was confirmed that the running performance on rough terrain can be improved without sacrificing the durability of the tread blocks.

As has been explained, the present invention is suitably applied to a motorcycle tire. However, the present invention can be applied to pneumatic tires for four-wheeled rally cars, all-terrain three-wheelers and the like as well.

## Claims

1. A pneumatic tire (1) comprising a tread portion (2), and a plurality of tread blocks (9) each having a top surface (11) disposed in the tread portion (2), wherein
a degree of circularity Eb of a contour shape (Sb) of a section of each said tread block (9) taken parallel with the top surface (11) thereof at a block foot position is more than a degree of circularity Et of a contour shape (St) of said top surface (11), the block foot position is defined as being spaced apart from a tread bottom (10) by 10 % of a height (h) of the tread block (9) from the tread bottom (10), and
the degree of circularity is defined by the following formula (1):

$$4 \times pi \times S / L^2 \quad \text{--- (1)}$$

7

wherein,

pi is the universal ratio of circumference to diameter of a circle,

S is an area of the contour shape, and

L is a circumference of the contour shape,

**characterized in that**

the tire further satisfies the following conditional equation:

$$Et < Ec < Eb$$

wherein

Ec is the degree of circularity of the contour shape (Sc) of a section taken parallel with the top surface at a block intermediate position, and

the block intermediate position is defined as being spaced apart from the tread bottom by 55 % of the height (h) of the tread block (9).

2. The pneumatic tire (1) according to claim 1, wherein the degree of circularity Eb of the contour shape (Sb) of the section at the block foot position is not less than 0.86 but not more than 1.0.

3. The pneumatic tire (1) according to claim 1, wherein the circumferential length Lt of the contour shape (St) of the top surface (11), the circumferential length Lb of the contour shape (Sb) of the section at the block foot position, and the circumferential length Lc of the contour shape (Sc) of the section at the block intermediate position satisfy the following conditional equation:

$$Lt =< Lc =< Lb.$$

4. The pneumatic tire (1) according to claim 3, wherein the following conditional equations are further satisfied:

$$1.10 =< Lb/Lt =< 1.40 \text{ and}$$
$$1.02 =< Lb/Lc =< 1.20.$$

5. The pneumatic tire (1) according to any one of claims 1-4, wherein the contour shape (st) of the top surface (11) is a polygonal shape.

6. The pneumatic tire (1) according to any one of claims 1-4, wherein the contour shape (St) of the top surface (11) is substantially a rectangle, and the contour shape (Sb) of the section at the block foot position is substantially an octagon or a pentagon or a circle,

wherein the term "substantially" means that the corners of such polygonal shapes (St, Sb) can be chamfered by an arc segment of a radius of less than 3 mm or a straight segment of less than 6 mm length in order to prevent the rubber of the tread block (9) from chipping.

7. The pneumatic tire (1) according to any one of claims 1-4, wherein the tread blocks (9) include:

a plurality of crown tread blocks (9C) in which the contour shape (St) of the top surface (11) is substantially a rectangle, and the contour shape (Sb) of the section at the block foot position is substantially an octagon; and

a plurality of shoulder tread blocks (9S) in which the contour shape (St) of the top surface (11) is substantially a rectangle, and the contour shape (Sb) of the section at the block foot position is substantially a pentagon, wherein the term "substantially" means that the corners of such polygonal shapes (st, sb) can be chamfered by an arc segment of a radius of less than 3 mm or a straight segment of less than 6 mm length in order to prevent the rubber of the tread block (9; 9C, 9S) from chipping.

**Patentansprüche**

1. Luftreifen (1), der einen Laufflächenabschnitt (2) und eine Vielzahl von Laufflächenblöcken (9) umfasst, die jeweils eine obere Oberfläche (11) aufweisen und in dem Laufflächenabschnitt (2) angeordnet sind, wobei ein Kreisförmigkeitsgrad Eb einer Konturform (Sb) eines Schnitts jedes Laufflächenblocks (9), parallel zu der oberen Oberfläche (11) davon an einer Blockfußposition genommen, größer als ein Kreisförmigkeitsgrad Et einer Konturform (St) der oberen Oberfläche (11) ist, wobei die Blockfußposition derart definiert ist, dass sie von einem Lauffflächen-grund (10) um 10 % einer Höhe (h) des Laufflächenblocks (9) von dem Laufflächengrund (10) beabstandet ist, und der Kreisförmigkeitsgrad durch die folgende Formel (1) definiert ist:

$$4 \times pi \times S/L^2 \ \ldots\ldots\ (1)$$

wobei
pi das universelle Verhältnis von Umfang zu Durchmesser eines Kreises ist,
S eine Fläche der Konturform ist, und
L ein Umfang der Konturform ist,
**dadurch gekennzeichnet, dass** der Reifen ferner die folgende Bedingungsgleichung erfüllt:

$$Et < Ec < Eb$$

wobei
Ec der Kreisförmigkeitsgrad der Konturform (Sc) eines Schnitts, parallel zu der oberen Oberfläche an einer Blockzwischenposition genommen, ist, und
die Blockzwischenposition derart definiert ist, dass sie von dem Laufflächengrund um 55 % der Höhe (h) des Laufflächenblocks (9) beabstandet ist.

2. Luftreifen (1) nach Anspruch 1,
wobei der Kreisförmigkeitsgrad Eb der Konturform (Sb) des Schnitts an der Blockfußposition nicht kleiner als 0,86 aber nicht größer als 1,0 ist.

3. Luftreifen (1) nach Anspruch 1,
wobei die Umfangslänge Lt der Konturform (St) der oberen Oberfläche (11), die Umfangslänge Lb der Konturform (Sb) des Schnitts an der Blockfußposition und die Umfangslänge Lc der Konturform (Sc) des Schnitts an der Blockzwischenposition die folgende Bedingungsgleichung erfüllen:

$$Lt \leq Lc \leq Lb.$$

4. Luftreifen (1) nach Anspruch 3,
wobei darüber hinaus die folgenden Bedingungsgleichungen erfüllt sind:

$1,10 \leq Lb/Lt \leq 1,40$ und
$1,02 \leq Lb/Lc \leq 1,20$.

5. Luftreifen (1) nach einem der Ansprüche 1 bis 4,
wobei die Konturform (St) der oberen Oberfläche (11) eine polygone Form ist.

6. Luftreifen (1) nach einem der Ansprüche 1 bis 4,
wobei die Konturform (St) der oberen Oberfläche (11) im Wesentlichen rechteckig ist, und die Konturform (Sb) des Schnitts an der Blockfußposition im Wesentlichen ein Oktagon oder ein Pentagon oder ein Kreis ist,
wobei der Ausdruck "im Wesentlichen" bedeutet, dass die Ecken derartiger polygoner Formen (St, Sb) durch ein Bogensegment mit einem Radius von weniger als 3 mm oder ein gerades Segment mit weniger als 6 mm Länge angefast sein können, um den Gummi des Laufflächenblocks (9) am Abschälen zu hindern.

7. Luftreifen (1) nach einem der Ansprüche 1 bis 4,
wobei die Laufflächenblöcke (9) umfassen:

eine Vielzahl von Kronenlaufflächenblöcken (9C), in welchen die Konturform (St) der oberen Oberfläche (11) im Wesentlichen ein Rechteck ist und die Konturform (Sb) des Schnitts an der Blockfußposition im Wesentlichen ein Oktagon ist; und

eine Vielzahl von Schulterlaufflächenblöcken (9S), in welchen die Konturform (St) der oberen Oberfläche (11) im Wesentlichen ein Rechteck ist und die Konturform (Sb) des Schnitts an der Blockfußposition im Wesentlichen ein Pentagon ist,

wobei der Ausdruck "im Wesentlichen" bedeutet, dass die Ecken derartiger polygoner Formen (St, Sb) durch ein Bogensegment mit einem Radius von weniger als 3 mm oder ein gerades Segment mit weniger als 6 mm Länge angefast sein können, um den Gummi des Laufflächenblocks (9; 9C, 9S) am Abschälen zu hindern.

## Revendications

1. Bandage pneumatique (1) comprenant une portion formant bande de roulement (2), et une pluralité de blocs de roulement (9) ayant chacun une surface supérieure (11) disposée dans la portion formant bande de roulement (2), dans lequel

un degré de circularité Eb d'une forme de contour (Sb) d'une section de chaque bloc de roulement (9), prise parallèlement à la surface supérieure (11) de celui-ci à une position du pied du bloc est supérieur à un degré de circularité Et d'une forme de contour (St) de ladite surface supérieure (11), la position du pied du bloc est définie comme étant écartée d'un fond (10) de la bande de roulement de 10 % d'une hauteur (h) du bloc de roulement (9) depuis le fond de la bande de roulement (10), et

le degré de circularité est défini par la formule suivante (1) :

$$4 \times pi \times S/L^2 \ ...... \ (1)$$

dans laquelle

pi est le rapport universel de la circonférence d'un cercle sur son diamètre,

S est une superficie de la forme de contour, et

L est une circonférence de la forme de contour,

**caractérisé en ce que** le bandage satisfait en outre à l'équation conditionnelle suivante :

$$Et < Ec < Eb$$

dans laquelle

Ec est le degré de circularité de la forme de contour (Sc) d'une section prise parallèlement à la surface supérieure à une position intermédiaire du bloc, et

la position intermédiaire du bloc est définie comme étant espacée du fond de la bande de roulement à 55 % de la hauteur (h) du bloc de roulement (9).

2. Bandage pneumatique (1) selon la revendication 1, dans lequel le degré de circularité Eb de la forme de contour (Sb) de la section à la position au pied du bloc n'est pas inférieur à 0,86 mais pas supérieur à 1,0.

3. Bandage pneumatique (1) selon la revendication 1, dans lequel la longueur circonférentielle Lt de la forme de contour (St) de la surface supérieure (11), la longueur circonférentielle Lb de la forme de contour (Sb) de la section à la position du pied du bloc, et la longueur circonférentielle Lc de la forme de contour (Sc) de la section à la position intermédiaire du bloc satisfont l'équation conditionnelle suivante :

$$Lt =< Lc =< Lb.$$

4. Bandage pneumatique (1) selon la revendication 3, dans lequel les équations conditionnelles suivantes sont également satisfaites :

1,10 =< Lb/Lt =< 1,40 et
1,02 =< Lb/Lc =< 1,20.

5. Bandage pneumatique (1) selon l'une quelconque des revendications 1 à 4, dans lequel la forme de contour (St) de la surface supérieure (11) est une forme polygonale.

6. Bandage pneumatique (1) selon l'une quelconque des revendications 1 à 4, dans lequel la forme de contour (St) de la surface supérieure (11) est sensiblement un rectangle, et la forme de contour (Sb) de la section à la position du pied du bloc est sensiblement un octogone ou un pentagone ou un cercle,
où le terme "sensiblement" signifie que les coins de telles formes polygonales (St, Sb) peuvent être chanfreinés par un segment d'arc d'un rayon inférieur à 3 mm ou un segment de droite d'une longueur inférieure à 6 mm afin d'empêcher au caoutchouc du bloc de roulement (9) de se délitter.

7. Bandage pneumatique (1) selon l'une quelconque des revendications 1 à 4, dans lequel les blocs de roulement (9) incluent :

une pluralité de blocs de roulement de couronne (9C) dans lesquels la forme de contour (St) de la surface supérieure (11) est sensiblement un rectangle, et la forme de contour (Sb) de la section à la position du pied du bloc est sensiblement un octogone ; et
une pluralité de blocs de roulement d'épaulement (9S) dans lesquels la forme de contour (St) de la surface supérieure (11) est sensiblement un rectangle, et la forme de contour (Sb) de la section à la position du pied du bloc est sensiblement un pentagone,
où le terme "sensiblement" signifie que les coins de telles formes polygonales (st, sb) peuvent être chanfreinés par un segment d'arc d'un rayon inférieur à 3 mm ou un segment de droite d'une longueur inférieure à 6 mm afin d'empêcher au caoutchouc du bloc de roulement (9 ; 9C, 9S) de se délitter.

FIG.1

EP 2 263 888 B1

## FIG.2

**FIG.3**

**FIG.4**

## FIG.5

9(9C)  11e  11  11e  11e  St  Sc  Sb(12e)  10

h  0.55h  0.1h  12

## FIG.6

9(9S)  11e(2e)  11  11e  11e  St  12  15  Sc  10
11e  12c  15  Sb
h  0.55h  0.1h  12c  15

# FIG.7(a)

Conv.

# FIG.7(d)

Ex.3

# FIG.7(b)

Ex.1

# FIG.7(e)

Ex.4

# FIG.7(c)

Ex.2

# FIG.7(f)

Ex.5

# FIG.8(a)

# FIG.8(b)

**EP 2 263 888 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005289092 A
- JP 2005199927 A